# EUROPEAN PATENT SPECIFICATION

(11) **EP 4 104 084 B1**
(45) Date of publication and mention of the grant of the patent: **14.05.2025**
(21) Application number: 20750114.9
(22) Date of filing: 14.07.2020
(51) Int. Cl.: G06F 21/55, G06F 21/62, G06Q 30/0242, G06Q 30/0251

(54) **SYSTEMS AND METHODS OF DELEGATED ANALYTICS COLLECTION**
SYSTEME UND VERFAHREN ZUR DELEGIERTEN ANALYSENSAMMLUNG
SYSTÈMES ET PROCÉDÉS DE COLLECTE D'ANALYSE DÉLÉGUÉE

(43) Date of publication of application: 21.12.2022
(73) Proprietor: Google LLC, Mountain View, CA 94043 (US)
(72) Inventor: ZAAROUR, Charbel, Mountain View, CA 94043 (US)
(74) Representative: Marks & Clerk GST
(86) International application number: PCT/US2020/042007
(87) International publication number: WO 2022/015295

(56) References cited:
- WO-A1-2016/148840
- US-A1- 2015 088 635
- US-A1- 2015 121 080
- US-A1- 2015 213 288
- US-A1- 2020 160 388

## Description

### BACKGROUND

It can be helpful for analytics systems to be able to determine information about data from client devices, such as how many devices interacted with a particular content item. To do so, data is often collected at an aggregator and then forwarded to an analysis service. However, forwarding the data from the client device to the aggregator to the analysis service introduces a time delay. Furthermore, if the aggregator becomes unavailable (e.g., the client device cannot send data to the aggregator), then the analysis service will not receive the data and no results will be produced.

US 2015/088635 A1 describes systems and methods of measurement and modification of advertisements and content. In one example, advertisements/content items (or web servers or applications that present the advertisements/content items) send signals to a measurement server in response to certain events or actions. The signals identify the advertisement/content item and the user that caused the event or performed the action. The measurement server aggregates received signals from different advertisements/content items to determine metrics such as digital brand lift (e.g., a change in brand awareness due to an advertisement/advertising campaign). The measurement server can send computed information back to an advertisement/content item, so that the advertisement/content item (or web server/application) can self-modify and/or deploy additional advertisements/content items.
US 2020/160388 Al discloses a system configured to use one or more algorithms or computational models to enable one or more participants of a personalized advertising chain to anonymously determine a user's preferences (or otherwise provide secured personal data analysis) by analyzing encrypted personal data.

### SUMMARY

In a first aspect, the invention claimed in this European patent is defined by a method according to claim 1. Optional features are set out in claims 2 to 6.

In a second aspect, the invention claimed in this European patent is defined by a system according to claim 7. Optional features are set out in claims 8 to 12.

In a third aspect, the invention claimed in this European patent is defined by a computer-readable medium according to claim 13. Optional features are set out in claims 14 and 15.

In some implementations, the interaction measurement SDK bundles interaction data from a number of events and transmits the bundled interaction data in response to a threshold. In some implementations, the threshold is a threshold period of time or a threshold number of events. In some implementations, the interaction SDK generates a signature of the interaction data using a hashing algorithm, and wherein the first computing device validates an authenticity of the interaction data using the signature. In some implementations, the method further includes securely transmitting the interaction data to a second computing device associated with the mobile application, and wherein the interaction SDK removes personal identifiers from the interaction data prior to securely transmitting the interaction data to the first computing device. In some implementations, the interaction data includes an intermediary identifier, and wherein method further includes identifying, by the second computing device, supplemental data using the intermediary identifier, transmitting, by the second computing device to the first computing device, the supplemental data, and correlating, by the first computing device, the interaction data with the supplemental data. In some implementations, the first computing device does not have access to personally identifying information. In some implementations, the method further includes analyzing, by the first computing device, at least the interaction data to generate data describing usage of the mobile application in real time. In some implementations, analyzing at least the interaction data includes identifying a previous interaction of the user that was not performed using the mobile application.

In some implementations, wherein the instructions cause the one or more processors to bundle interaction data from a number of events and transmit the bundled interaction data in response to a threshold. In some implementations, the threshold is a threshold period of time or a threshold number of events. In some implementations, the instructions cause the one or more processors to generate a signature of the interaction data using a hashing algorithm, and wherein the first computing device validates an authenticity of the interaction data using the signature. In some implementations, the instructions further cause the one or more processors to securely transmit the interaction data to the second computing device and remove personal identifiers from the interaction data prior to securely transmitting the interaction data to the first computing device. In some implementations, wherein the interaction data includes an intermediary identifier, wherein the second computing device identifies supplemental data using the intermediary identifier, wherein second computing device transmits the supplemental data to the first computing device, and wherein the first computing device correlates the interaction data with the supplemental data. In some implementations, the first computing device does not have access to personally identifying information. In some implementations, the first computing device analyzes at least the interaction data to generate data describing usage of the mobile application in real time. In some implementations, analyzing at least the interaction data includes identifying a previous interaction of the user that was not performed using the mobile application.

In some implementations, wherein the SDK bundles interaction data from a number of events and transmits the bundled interaction data in response to a threshold, wherein the threshold is a threshold period of time or a threshold number of events, wherein the interaction SDK generates a signature of the interaction data using a hashing algorithm, and wherein the first computing device validates an authenticity of the interaction data using the signature. In some implementations, the instructions further cause the one or more processors to securely transmit the interaction data to a second computing device and remove personal identifiers from the interaction data prior to securely transmitting the interaction data to the first computing device.

The various aspects and implementations may be combined where appropriate.

### BRIEF DESCRIPTION OF THE DRAWINGS

FIG. 1 is a diagram illustrating various entities interacting over a network, according to an illustrative implementation.
FIG. 2 is a diagram illustrating an architecture for data transfer and correlation, according to an implementation.
FIG. 3 is a flow diagram illustrating a method of generating and transmitting event data using the architecture of FIG. 2, according to an illustrative implementation.
FIG. 4 is a flow diagram illustrating a method of determining supplemental data using the architecture of FIG. 2, according to an illustrative implementation.
FIG. 5 is a flow diagram illustrating a method of generating analytics results using the architecture of FIG. 2, according to an illustrative implementation.
FIG. 6 is a block diagram of a computing system, according to an illustrative implementation.

### DETAILED DESCRIPTION

Following below are more detailed descriptions of various concepts related to, and implementations of, methods, apparatuses, and systems for collecting event data in a timely and redundant manner while preserving privacy. The various concepts introduced above and discussed in greater detail below may be implemented in any of numerous ways, as the described concepts are not limited to any particular manner of implementation.

In many domains, it may be desirable to collect event data from mobile devices. For example, in the event of a malfunction (e.g., a software crash, a hardware failure, etc.), it is often desirable to collect event data such as device settings, operating parameters, and the like in order to diagnose and fix the malfunction. In other domains, it may be desirable for a provider of third party content to determine a rate of interaction with that third party content.

System and methods of the present disclosure relate generally to reporting mobile device event data. More specifically, systems and methods of the present disclosure relate to a unique software development kit (SDK) and computer architecture methodologies to collect and correlate event data from mobile devices.

Typically, event data from mobile devices is sent to a single endpoint (e.g., an aggregator, etc.) and then forwarded to an analysis system for analysis (e.g., correlation, etc.). For example, event data generated by a first mobile application may be transmitted to servers controlled by a developer of the first mobile application which may collect the data and forward it to an analysis system which determines aggregate statistics associated with the event data. However, the single endpoint may not always be available. For example, the endpoint may experience unexpected failures or routine maintenance which prevent it from receiving data from mobile devices and/or forwarding data to the analysis system. It is desirable to have a robust architecture that facilitates analysis of event data even if the first endpoint becomes unavailable. Therefore, there is a need for a unique SDK and computer architecture methodology to facilitate transmission of event data directly to the analysis system.

As discussed above, event data from mobile devices is generally sent to a single endpoint (e.g., an aggregator, etc.) and then forwarded to an analysis system for analysis. For example, a developer may receive event data and send the event data to a third party for analysis (e.g., because analyzing the event data is prohibitively difficult, complex, and/or expensive for the developer, etc.). However, transmitting event data from a client device to an aggregator and then to an analysis system introduces a time delay. It may be undesirable to introduce a time delay. For example, an analysis system may be used to identify bugs in application 12, such as link rot. The time delay introduced by forwarding data from client devices to an aggregator and then to the analysis system may use additional system and network resources which could be more efficiently deployed elsewhere and may increase the amount of time it takes to identify a bug in application 12. For example, the analysis system may detect a stale hyperlink several days after it goes stale (e.g., ceases to function properly, etc.). Therefore, there is a need for a unique SDK and computer architecture methodology to facilitate timely analysis of application events.

Aspects of the present disclosure provide improved data reporting and analysis pathways and computer architectures. The pathways and architectures may be used to report and analyze mobile device event data in a robust and timely manner that prevents exposing PII to third parties.

To ensure robustness against endpoint failure, systems and methods of the present disclosure introduce an SDK that facilitates sending data to a second endpoint. A non-limiting example implementation is as follows: a user using a desktop device may view a first content item. A first computing system may register that the user viewed the first content item. The user using a mobile application may then interact with a second content item, thereby causing the mobile application to transmit event data associated with the interaction to the first computing device. A SDK embedded in the mobile application may register that the user interacted with the second content item and may prepare event data associated with the interaction for transmission. For example, the event data may include the content item, a time, and a source of the content item (e.g., a website, etc.). The SDK may remove any personal identifiers from the event data, such as a mobile device identifier. The SDK may then securely transmit the event data to a second computing device. The first computing device may identify the user and prepare supplemental data associated with the user's interaction with the second content item. For example, the first computing device may identify data corresponding to the user's interaction with the first content item. The first computing device may remove any personal identifiers from the supplemental data and transmit the supplemental data to the second computing device. The second computing device may correlate the event data with the supplemental data to determine a result.

In various embodiments, the SDK of the present disclosure removes identifiers from event data before transmitting the event data to the analysis system. In various embodiments, the SDK of the present disclosure facilitates correlation of data through intermediary identifiers. For example, the SDK of the present disclosure may transmit event data having an intermediary identifier (e.g., an event identifier, etc.) to a first endpoint (e.g., an aggregator, etc.) and the analysis system. The first endpoint may be associated with an application (e.g., a server maintained by the developers of the application, etc.). In some implementations, the first endpoint may independently maintain user information such as account balances associated with user accounts of the application. The first endpoint may identify supplemental data. For example, the first endpoint may maintain a database having interaction data and may search the database for interaction data associated with a user. The supplemental data may include an intermediary identifier. The first endpoint may transmit the supplemental data to the analysis system which may correlate the supplemental data with the event data using the intermediary identifier, thereby preserving PII.

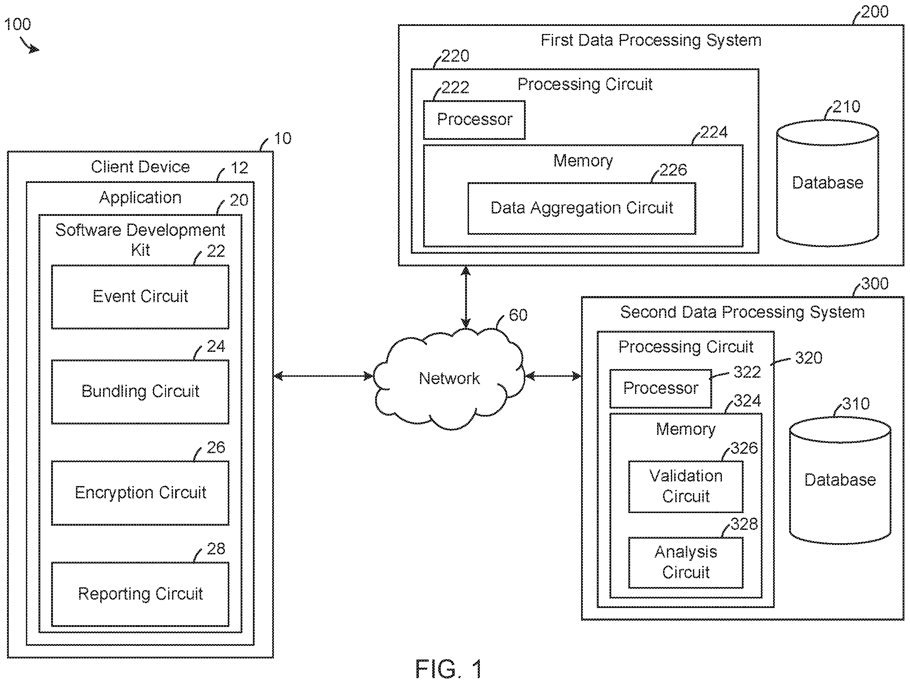

Referring now to FIG. 1, a system 100 for collecting event data from mobile devices is shown, according to an illustrative implementation. System 100 includes client device 10, first data processing system 200, and second data processing system 300. In various implementations, components of system 100 communicate over network 60. Network 60 may include computer networks such as the Internet, local, wide, metro or other area networks, intranets, satellite networks, other computer networks such as voice or data mobile phone communication networks, combinations thereof, or any other type of electronic communications network. Network 60 may include or constitute a display network (e.g., a subset of information resources available on the Internet that are associated with a content placement or search engine results system, or that are eligible to include third party content items as part of a content item placement campaign). In various implementations, network 60 facilitates secure communication between components of system 100. As a non-limiting example, network 60 may implement transport layer security (TLS), secure sockets layer (SSL), hypertext transfer protocol secure (HTTPS), and/or any other secure communication protocol.

Client device 10 may be a mobile computing device, smartphone, tablet, or any other device configured to facilitate receiving, displaying, and interacting with content (e.g., web pages, mobile applications, etc.). Client device 10 may include an application 20 to receive and display online content and to receive user interaction with the online content. For example, application 20 may be a web browser. Additionally or alternatively, application 20 may be a mobile application associated with a specific merchant.

In various implementations, application 20 interacts with a content publisher to receive online content. For example, application 20 may receive an information resource from a content publisher. The information resources may include web-based content items such as a web page or other online documents. The information resources may include instructions (e.g., scripts, executable code, etc.) that when interpreted by application 20 cause application 20 to display a graphical user interface such as an interactable web page to a user.

Application 20 is shown to include software development kit 20 having event circuit 22, bundling circuit 24, encryption circuit 26, and reporting circuit 28. Software development kit (SDK) 20 may include a collection of software development tools contained in a package. SDK 20 may include an application programming interface (API). In some implementations, SDK 20 includes one or more libraries having reusable functions that interface with a particular system software (e.g., iOS, Android, etc.). SDK 20 may facilitate embedding functionality in application 12. For example, a developer may use SDK 20 to automatically transmit event data whenever an event of a specific type occurs on application 12. As a further example, SDK 20 may include a reusable function configured to collect and report device analytics and a developer may insert the reusable function into the instructions of application 12 to cause the reusable function to be called during specific actions of application 12. In some implementations, event circuit 22, building circuit 24, encryption circuit 26, and/or reporting circuit 28 are functionalities provided by SDK 20 (e.g., reusable functions, etc.).

Event circuit 22 may detect events within application 12. In various implementations, event circuit 22 may be configured to trigger other functionality based on detecting specific events (e.g., transactions, in-app purchases, achieving a certain level in an in-app game, performing a certain number of actions, spending a certain amount of time interacting with an application, etc.). For example, event circuit 22 may trigger bundling circuit 24 upon detecting an event within application 12. In various implementations, SDK 20 includes a function that is embedded in application 12 to trigger event circuit 22. For example, a developer may include a function of SKD 20 in a transaction confirmation functionality of application 12 that causes event circuit 22 to detect a confirmed transaction. It should be understood that events may include any action important to a developer within an application and are not limited to the examples expressly contemplated herein. In various implementations, event circuit 22 is configured to differentiate between different types of events. For example, event circuit 22 may trigger a first set of actions based on a first type of detected event and may trigger a second set of actions based on a second type of detected event. In various implementations, event circuit 22 is configured to collect event data associated with the detected event and transmit the collected event data to bundling circuit 24.

Bundling circuit 24 bundles (e.g., aggregate, etc.) event data. In various implementations, bundling circuit 24 receives event data associated with a detected event from event circuit 22. Bundling circuit 24 may collect event data from one or more events and bundle the event data for transmission. For example, bundling circuit 24 may collect event data from ten events and combine the event data into a single bundle. Event data may include a timestamp of the event, a name of the event, and/or parameters of the event (e.g., a purchased item, a price, a currency, discounts, subscription information, etc.). In some implementations, bundling circuit 24 transmits bundles to encryption circuit 26. Additionally or alternatively, bundling circuit 24 may transmit bundles to reporting circuit 28. In various implementations, bundling circuit 24 generates a data bundle. The data bundle may include a bundle index, a bundle timestamp, bundle data, and a bundle signature. In various implementations, the bundle signature is generated by encryption circuit 26, discussed below. In some implementations, the bundle index specifies where specific event data is located in the bundle data. For example, the bundle data may include a byte array and the bundle index may include an index to the byte array.

Encryption circuit 26 may encrypt data to produce encrypted data. For example, encryption circuit 26 may encrypt bundled event data. Additionally or alternatively, encryption circuit 26 may perform various obliviating functions on received data. For example, encryption circuit 26 may remove identifiers (e.g., IP address, device identifiers, etc.), fragment event data, add noise, or perform other functions to anonymize data. In various implementations, encryption circuit 26 implements asymmetric encryption. For example, encryption circuit 26 may implement a Rivest-Shamir-Adleman (RSA) cryptosystem. In various implementations, encryption circuit 26 may receive a public key from first data processing system 200 and use the public key to encrypt received data. Additionally or alternatively, encryption circuit 26 may generate a signature associated with received data. For example, encryption circuit 26 may generate a hash of bundled event data received from bundling circuit 24. One or more hashing functions may be used. For example, encryption circuit 26 may implement a SHA-2, Scrypt, Balloon, and/or Argon2 hashing function.

Reporting circuit 28 may transmit bundled event data to first data processing system 200 and/or second data processing system 300. In various implementations, reporting circuit 28 transmits data via network 60. Reporting circuit 28 may confirm the transmission of data. For example, reporting circuit 28 may transmit bundled event data to first data processing system 200 and receive a confirmation that the bundled event data was received successfully. In some implementations, reporting circuit 28 first attempts to transmit bundled event data to first data processing system 200 and if that fails then attempts to transmit bundled event data to second data processing system 300. Additionally or alternatively, reporting circuit 28 may transmit data to first data processing system 200 and second data processing system 300 in parallel. In some implementations, reporting circuit 28 transmits different data to first data processing system 200 and second data processing system 300. For example, reporting circuit 28 may transmit encrypted event data having device identifiers to first data processing system 200 and may transmit unencrypted event data without device identifiers to second data processing system 300. Additionally or alternatively, reporting circuit 28 may transmit the same data to first data processing system 200 and second data processing system 300.

In various implementations, reporting circuit 28 transmits data periodically. For example, reporting circuit 28 may transmit data at a predefined time. As another example, reporting circuit 28 may transmit data on an interval (e.g., every ten minutes, every ten hours, etc.). Additionally or alternatively, reporting circuit 28 may transmit data in response to a threshold. For example, reporting circuit 28 may transmit data in response to bundling circuit receiving a threshold number of event data from events (e.g., ten events, one-hundred events, etc.). In some implementations, reporting circuit 28 transmits data dynamically. For example, reporting circuit 28 may transmit data in response to client device 10 being connected to a charging source. As a further example, reporting circuit 28 may transmit data in response to the transmission bundle reaching a specified data size.

In various implementations, reporting circuit 28 reports metrics. For example, reporting circuit 28 may transmit metrics alongside each data bundle. The metrics may include a size of the data bundle, a timestamp of the transmission and/or generation of the data bundle, a data bundle index, an SDK identifier, and/or a signature of the data bundle. In various implementations, the SDK identifier includes information associated with SDK 20. For example, the SDK identifier may include a version number of SDK 20. The signature of the data bundle may include a hash of the data bundle contents as discussed above with reference to encryption circuit 26.

First data processing system 200 may receive event data from SDK 20 and/or generate supplemental data. In various implementations, first data processing system 200 receives a data bundle from SDK 20, identifies supplemental data based on the contents of the data bundle, and transmits the supplemental data to second data processing system 300. In some implementations, first data processing system 200 anonymizes the supplemental data before transmission to second data processing system 300. For example, first data processing system 200 may remove personal identifiers from the supplemental data before transmission to second data processing system 300. First data processing system 200 may be a server, distributed processing cluster, cloud processing system, or any other computing device. First data processing system 200 may include or execute at least one computer program or at least one script. In some implementations, first data processing system 200 includes combinations of software and hardware, such as one or more processors configured to execute one or more scripts.

First data processing system 200 is shown to include database 210 and processing circuit 220. Database 210 may store supplemental data. For example, database 210 may include information associated with previous content interactions. As an additional example, a user using a desktop computer may navigate to a website and interact with a content item. First data processing system 200 may receive information associated with the user's interaction with the content item and store the information in database 210. The supplemental data may include content identifiers, device identifiers, user identifiers, clickstreams, and/or the like. Database 210 may include one or more storage mediums. The storage mediums may include but are not limited to magnetic storage, optical storage, flash storage, and/or RAM. First data processing system 200 may implement or facilitate various APIs to perform database functions (i.e., managing data stored in database 210). The APIs can be but are not limited to SQL, ODBC, JDBC, and/or any other data storage and manipulation API.

Processing circuit 220 may include processor 222 and memory 224. Memory 224 may have instructions stored thereon that, when executed by processor 222, cause processing circuit 220 to perform the various operations described herein. The operations described herein may be implemented using software, hardware, or a combination thereof. Processor 222 may include a microprocessor, ASIC, FPGA, etc., or combinations thereof. In many implementations, processor 222 may be a multi-core processor or an array of processors. Memory 224 may include, but is not limited to, electronic, optical, magnetic, or any other storage devices capable of providing processor 222 with program instructions. Memory 224 may include a floppy disk, CD-ROM, DVD, magnetic disk, memory chip, ROM, RAM, EEPROM, EPROM, flash memory, optical media, or any other suitable memory from which processor 222 can read instructions. The instructions may include code from any suitable computer programming language such as, but not limited to, C, C++, C#, Java, JavaScript, Perl, HTML, XML, Python and Visual Basic.

Memory 224 may include data aggregation circuit 226. Data aggregation circuit 226 may identify supplemental data from database 210. In various embodiments, data aggregation circuit 226 receives a data bundle from SDK 20 and analyzes contents of the data bundle to identify supplemental data. For example, aggregation circuit 226 may receive a data bundle including an event associated with a first device identifier, may identify supplemental data including previous content interactions associated with the device identifier, and may transmit the supplemental data to second data processing system 300. In various implementations, supplemental data is associated with contents of a data bundle. For example, the supplemental data may be related to event data of an event included in a data bundle through an intermediate identifier. In some implementations, data aggregation circuit 226 verifies the contents of a received data bundle. For example, data aggregation circuit 226 may verify a signature included in the data bundle. Additionally or alternatively, data aggregation circuit 226 may decrypt the contents of the data bundle. For example, data aggregation circuit 226 may receive an asymmetrically encrypted data bundle and decrypt the asymmetrically encrypted data bundle using a private key.

Second data processing system 300 may receive event data from SDK 20 and facilitate performing analysis on received data to generate information. For example, second data processing system 300 may receive a data bundle including event data from SDK 20 and supplemental data from first data processing system 200 and securely correlate the received data to generate information. As another example, second data processing system 300 may receive first data associated with a transaction from SDK 20 and second data associated with a user interaction with a content item from first data processing system 200 and correlate the first and second data.

In various embodiments, second data processing system 300 generates aggregate information. For example, second data processing system 300 may determine how many users completed a transaction after interacting with a content item. The aggregate information may describe a number or grouping of online interactions (e.g., interactions with a number of content items). Additionally or alternatively, the aggregate information may describe an individual online interaction (e.g., a single interaction with a single content item). Aggregate information may include a unique identifier. In some implementations, the identifier identifies a marketing campaign. Additionally or alternatively, the identifier may uniquely identify each online interaction. In some implementations, the aggregate information describes one or more interactions associated with content items. For example, aggregate information may include a time, date, and/or location of online interactions. The interactions described by the anonymous interaction data may include viewing a content item (e.g., navigating to a webpage in which a content item is presented and/or determining that the item or a portion of the item is presented within a viewport of the device upon which the webpage is viewed, etc.), selecting/clicking a content item, hovering over a content item, and/or other interactions with a content item.

Second data processing system 300 may be a server, distributed processing cluster, cloud processing system, or any other computing device. Second data processing system 300 may include or execute at least one computer program or at least one script. In some implementations, second data processing system 300 includes combinations of software and hardware, such as one or more processors configured to execute one or more scripts.

Second data processing system 300 is shown to include database 310 and processing circuit 320. Database 310 may store received data. For example, database 310 may store event data received from SDK 20 and/or supplemental data received from first data processing system 200. In some implementations, database 310 stores identifiers. For example, database 310 may store event data and supplemental data sharing an intermediary identifier. The identifier may be used later for correlation of anonymous interaction data. Database 310 may include one or more storage mediums. The storage mediums may include but are not limited to magnetic storage, optical storage, flash storage, and/or RAM. Second data processing system 300 may implement or facilitate various APIs to perform database functions (i.e., managing data stored in database 310). The APIs can be but are not limited to SQL, ODBC, JDBC, and/or any other data storage and manipulation API.

Processing circuit 320 includes processor 322 and memory 324. Memory 324 may have instructions stored thereon that, when executed by processor 322, cause processing circuit 320 to perform the various operations described herein. The operations described herein may be implemented using software, hardware, or a combination thereof. Processor 322 may include a microprocessor, ASIC, FPGA, etc., or combinations thereof. In many implementations, processor 322 may be a multi-core processor or an array of processors. Memory 324 may include, but is not limited to, electronic, optical, magnetic, or any other storage devices capable of providing processor 322 with program instructions. Memory 324 may include a floppy disk, CD-ROM, DVD, magnetic disk, memory chip, ROM, RAM, EEPROM, EPROM, flash memory, optical media, or any other suitable memory from which processor 322 can read instructions. The instructions may include code from any suitable computer programming language such as, but not limited to, C, C++, C#, Java, JavaScript, Perl, HTML, XML, Python and Visual Basic.

Memory 324 may include validation circuit 326 and analysis circuit 328. Validation circuit 326 may validate data bundles received from SDK 20. In various implementations, validation circuit 326 validates data bundles by verifying a signature included in the data bundles. For example, a signature may include a hash of contents of the data bundle and/or event data and validation circuit 326 may hash the contents of the data bundle and compare the generated hash to the received signature to determine whether the contents of the data bundle have been modified. In some implementations, if validation circuit 326 determines a data bundle (or specific event data included in the data bundle) to be invalid, it discards the invalid data. Additionally or alternatively, validation circuit 326 may flag the data as invalid which can be used by later systems to generate a confidence metric associated with the analysis results.

Analysis circuit 328 may receive data and produce information regarding the data. In various implementations, analysis circuit 328 performs statistical operations on received data to produce statistical measurements describing the received dataaa. For example, analysis circuit 328 may determine an interaction rate associated with a marketing campaign. In some implementations, analysis circuit 328 generates demographic information (e.g., user distributions, etc.), geographic results (e.g., location distributions, etc.), and/or audiences (e.g., a target group of users based on one or more parameters, for example users who purchased more than a threshold amount, etc.). In some implementations, analysis circuit 328 correlates event data with supplemental data. For example, analysis circuit 328 may correlate event data associated with an event with supplemental data associated with a content interaction using an intermediate identifier to determine an effect of the content interaction on causing the event. In various implementations, analysis circuit 328 generates information. The information may include an interaction rate, data describing an operation of application 12, and/or the like.

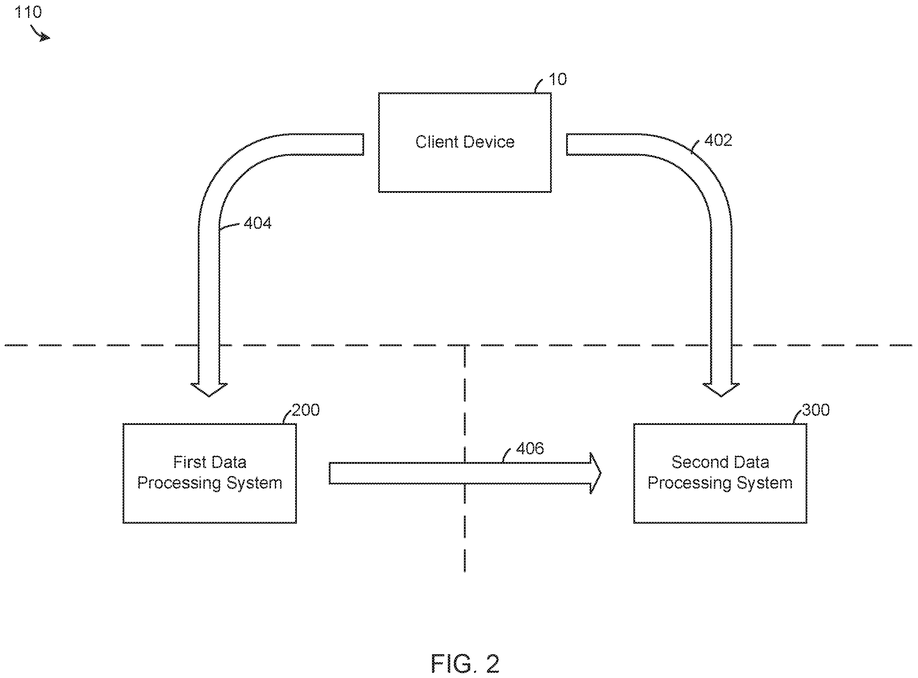

Referring now to FIG. 2, an improved computer architecture for securely transmitting and correlating data from mobile devices is shown, according to an illustrative implementation. In brief summary, developers may utilize reusable functions of SDK 20 to generate and transmit event data from client device 10 to first data processing system 200 and second data processing system 300 in response to events. For example, functions of SDK 20 embedded in a mobile application (e.g., application 12, etc.) may cause client device 10 to collect and transmit data associated with client device 10 in response to a user confirming a transaction, selecting a menu option, viewing a content item, and/or the like. In response to detecting the event, SDK 20 may collect, bundle, and transmit data to first data processing system 200 and second data processing system 300 for analysis.

In various implementations, first data processing system 200 may store additional or supplemental data. For example, first data processing system 200 may store data associated with past customers (e.g., user preferences, etc.). As an additional example, first data processing system 200 may store data associated with previous user interactions with content. First data processing system 200 may identify supplemental data based on the data received from client device 10 and may transmit the supplemental data to second data processing system 300. Supplemental data may include previous user interactions (e.g., a record of a user viewing a content item such as a video, a previous transaction, etc.), user demographic information, user preferences, and/or any other data. It should be understood that supplemental data may include any data that a developer has access to that is associated with a user and is not limited to the specific examples explicitly contemplated herein. In various implementations, second data processing system 300 correlates the data from client device and first data processing system 200 to determine a result. Additionally or alternatively, second data processing system 300 may analyze the data received from client device 10 to determine a result. As a non-limiting example, a user shown a video may click on the video. A content provider (e.g., first data processing system 200, etc.) providing the video may wish to know how many users clicked on the video. In some implementations, users may interact with other content provided by the content provider as a result of their interaction with the first content item. For example, a user shown the video may later visit a website maintained by the content provider to purchase an item featured in the video. In some implementations, the interaction is or is associated with an online conversion. SDK 20 may facilitate robust reporting and analysis of user interactions with online content while preserving PII.

FIG. 2 illustrates a system 110 for transmitting and analyzing event data from mobile devices. In various implementations, client device 10 implements SDK 20 to facilitate collection and transmission of event data. For example, a developer may embed a reusable function of SDK 20 into application 12 on client device 10 to cause client device 10 to transmit data related to specific events. In various implementations, SDK 20 facilitates redundancy in reporting event data. For example, SDK 20 may enable a fallback pathway to report event data. In various implementations, application 12 may natively report application data to first data processing system 200. SDK 20 may facilitate transmitting event data, redundantly and/or in parallel, to second data processing system 300.

In various implementations, SDK 20 embedded in application 12 on client device 10 generates event data. For example, a user using application 12 may update a notification preference and SDK 20 may detect the change in preference and generate event data. The event data may include device settings (e.g., software version, hardware settings, configurations, etc.), user account settings (e.g., preferences, activity, etc.), action-sequences (e.g., clickstreams, etc.), data related to the specific event, such as the changed notification preferences, and/or the like. In some implementations, the event data describes a series of actions (e.g., clicks) the user made leading up to a purchase as well as information regarding the purchase itself (e.g., price, item purchased, etc.). In various implementations, SDK 20 bundles event data from a number of events. For example, SDK 20 may bundle event data from 10 events to reduce the power consumption associated with transmitting each event individually.

At step 404, SDK 20 and/or application 12 may transmit the bundled event data to first data processing system 200. In some implementations, the event data transmitted to first data processing system 200 includes identifiers. In various implementations, the event data transmitted to first data processing system 200 is encrypted (e.g., asymmetrically encrypted, etc.). In some implementations, SDK 20 may determine whether first data processing system 200 received the bundled event data successfully. In some implementations, if SDK 20 determines first data process system 200 did not receive the bundled event data successfully, then SDK 20 transmits the bundled event data to second data processing system 300. Additionally or alternatively, SDK 20 may transmit the bundled event data to second data processing system 300 in parallel (step 402). In various implementations, SDK 20 removes personal identifiers from the bundled event data before transmitting to second data processing system 300. For example, SDK 20 may remove device identifiers and/or user identifiers before transmitting the bundled event data to second data processing system 300.

In various implementations, first data processing system 200 identifies supplemental data based on the received bundled event data. For example, first data processing system 200 may identify previous interaction data associated with a user identified by a user identifier included in the bundled event data. At step 406, first data processing system 200 may transmit the supplemental data to second data processing system 300. In various implementations, first data processing system 200 removes personal identifiers before transmitting the supplemental data to second data processing system 300. For example, first data processing system 200 may remove device identifiers and/or user identifiers before transmitting the supplemental data to second data processing system 300.

Second data processing system 300 may receive the event data from client device 10 (e.g., via SDK 20, etc.) and/or the supplemental data from first data processing system 200. In various implementations, second data processing system 300 analyzes (e.g., performs various correlations and/or statistical operations on, etc.) the event data and/or the supplemental data to generate results. For example, second data processing system 300 may correlate previous interaction data included in the supplemental data with a transaction included in the event data using an intermediary identifier to determine a conversion rate.

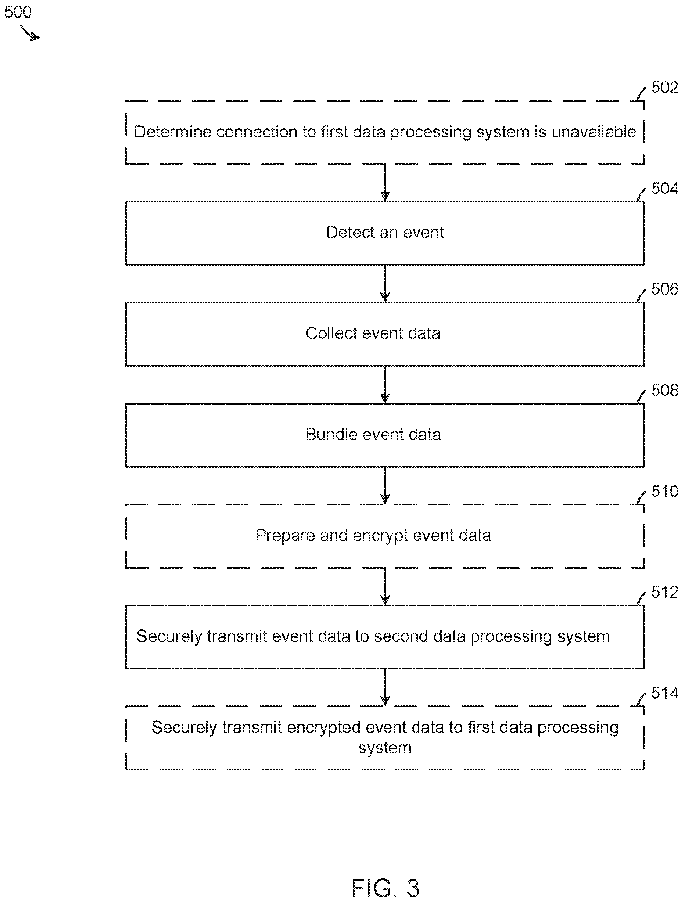

Referring now to FIG. 3, method 500 of reporting event data is shown, according to an implementation. In brief summary, SDK 20 and/or application 12 generates event data in response to interactions associated with a user (e.g., in-application interactions, etc.) and SDK 20 reports the event data to an endpoint. In various implementations, SDK 20 performs method 500. At step 502, SDK 20 determines a connection to first data processing system 200 is unavailable. For example, SDK 20 may ping first data processing system 200 to determine if it is online. In some implementations, SDK 20 determines whether first data processing system 200 confirms receipt of a data package (e.g., previous event data, etc.). In some implementations, step 502 is optional.

At step 504, SDK 20 detects an event. SDK 20 may include various reusable functions that are embedded by developers in application 12. When application 12 performs a particular operation, the reusable functions of SDK 20 may be invoked, thereby causing SDK 20 to perform various actions. For example, a reusable function of SDK 20 may be embedded in a checkout process of application 12 and may cause SDK 20 to report event data (e.g., data associated with the transaction, etc.) when the checkout is completed. Additionally or alternatively, SDK 20 may detect an event by listening for various indications from application 12. For example, application 12 may generate a flag when an application event occurs and SDK 20 may detect the flag to identify the occurrence of an event.

At step 506, SDK 20 may collect event data from application 12 and/or client device 10. For example, SDK 20 may collect data related to a transaction associated with the event. At step 508, SDK 20 bundles the event data. Step 508 may include combining event data from a number of events into a single data package. For example, event data from one-hundred events may be combined into bundled event data. In some implementations, SDK 20 bundles event data from events occurring over a specified time period. For example, SDK 20 may bundle events from each day (e.g., 24-hour period, etc.). It should be understood that various bundling techniques are possible and SDK 20 is not limited to the specific techniques expressly enumerated herein. In various implementations, SDK 20 labels the event data. For example, SDK 20 may label the event data with an event type. The event type may correspond to a source of the event data. For example, SDK 20 may determine first event data corresponding to an in-application transaction is of a "transaction" type and second event data corresponding to visiting a web-page is of a "content interaction" type. In various implementations, SDK 20 generates different event data based on the event type. For example, SDK 20 may generate event data including an item price and quantity for a "transaction" event and may generate event data including a content identifier for "content interaction" type data. In should be understood that many event types are possible and are not limited to the types expressly contemplated herein.

At step 510, SDK 20 may prepare and encrypt event data. In various implementations, step 510 includes removing identifiers. For example, SDK 20 may remove personal identifiers (e.g., device identifiers, user identifiers, etc.) from bundled event data. Additionally or alternatively, SDK 20 may encrypt the bundled event data. For example, SDK 20 may asymmetrically encrypt the bundled event data using a public key received from first data processing system 200. According to the invention claimed in this European patent, SDK 20 removes identifiers from bundled event data that is transmitted to second data processing system 300. In some implementations, SDK 20 encrypts bundled event data that is transmitted to first data processing system 200. In some implementations, step 510 includes generating a signature of the bundled event data. For example, SDK 20 may generate a signature by hashing the bundled event data. In some implementations, step 510 is optional.

At step 512, SDK 20 securely transmits event data to second data processing system 300. According to the invention claimed in this European patent, SDK 20 transmits the event data to second data processing system 300 in response to determining that first data processing system 200 is unavailable (e.g., based on step 502, etc.). According to the invention claimed in this European patent, SDK 20 transmits event data to second data processing system 300 that is free of personal identifiers, thereby preserving PII. In some implementations, SDK 20 transmits the bundled event data to second data processing system 300 in response to a threshold. For example, SDK 20 may transmit the bundled event data to second data processing system 300 in response to a threshold number of events being included in the event data bundle. In various implementations, SDK 20 facilitates specifying a destination (e.g., second data processing system 300, etc.). For example, SDK 20 may facilitate receiving a URL and/or an IP address of second data processing system 300 specifying where to transmit event data to.

At step 514, SDK 20 may securely transmit encrypted event data to first data processing system 300. In various implementations, SDK 20 transmits encrypted event data including one or more identifiers to first data processing system 200. In some implementations, step 514 is optional.

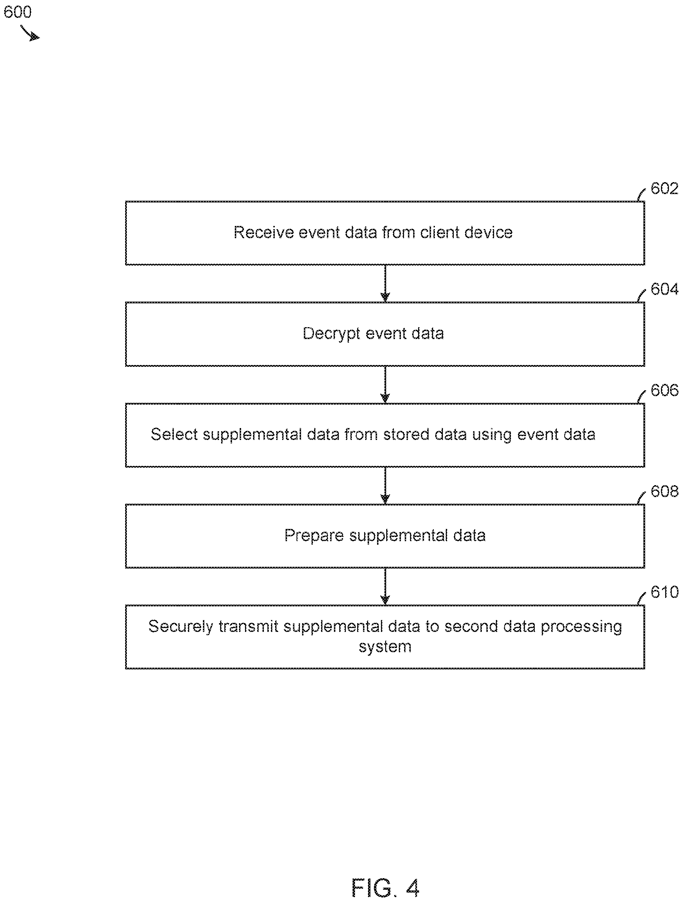

Referring now to FIG. 4, method 600 of identifying supplemental data is shown, according to an implementation. In some implementations, first data processing system 200 performs method 600. In some implementations, first data processing system 200 performs method 600 in response to receiving event data from client device 10 and/or SDK 20. At step 602, first data processing system 200 receives event data from client device 10. In various implementations, first data processing system 200 receives event data including identifiers. For example, first data processing system 200 may receive event data including device identifiers. Additionally or alternatively, first data processing system 200 may receive encrypted event data.

At step 602, first data processing system 200 may decrypt the event data. In various implementations, step 602 includes asymmetrically decrypting the event data using a private key held by first data processing system 200 to produce unencrypted event data. At step 606, first data processing system 200 may select supplemental data from stored data using the event data. In various implementations, step 606 includes identifying supplemental data using an identifier included in the event data. In various implementations, first data processing system 200 searches database 210. Database 210 may include data associated with previous content interactions. For example, first data processing system 200 may identify previous content interactions associated with a user. As an additional example, first data processing system 200 may identify a video that a user previously watched.

At step 608, first data processing system 200 may prepare the supplemental data. For example, first data processing system 200 may remove personal identifiers associated with the supplemental data. In some implementations, first data processing system 200 removes IP addresses, user identifiers, and/or device identifiers associated with the supplemental data. Additionally or alternatively, first data processing system 200 may perform various obliviating functions on the supplemental data. For example, first data processing system 200 may fragment the supplemental data data, add noise, or perform other functions to anonymize data. At step 610, first data processing system 200 may securely transmit the supplemental data to second data processing system 300. In some implementations, first data processing system 200 transmits the supplemental data to second data processing system 300 in response to a signal. For example, second data processing system 300 may send a request for supplemental data to first data processing system 200.

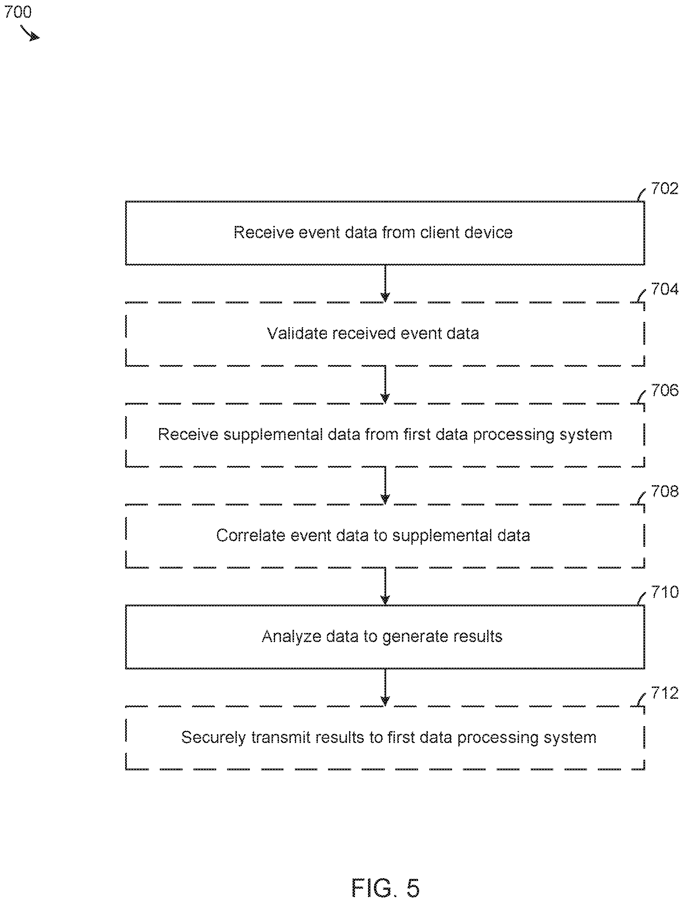

Referring now to FIG. 5, method 700 of analyzing event data and/or supplemental data is shown, according to an implementation. In various implementations, second data processing system 300 performs method 700. In some implementations, second data processing system 300 performs method 700 in response to receiving data from client device 10. Additionally or alternatively, second data processing system 300 may perform method 700 in response to receiving a request for results from an external system (e.g., first data processing system 200, etc.).

At step 702, second data processing system 300 may receive event data from client device 10 (e.g., via SDK 20, etc.). In various implementations, the event data is bundled event data. In various implementations, the event data does not include personal identifiers. At step 704, second data processing system 300 may validate the received event data. In various implementations, the event data includes a signature. Second data processing system 300 may validate the event data using the signature. For example, second data processing system 300 may generate a hash of the received event data and compare the generated hash to a signature included in the event data. In some implementations, step 704 is optional.

At step 706, second data processing system 300 may receive supplemental data from first data processing system 200. In some implementations, second data processing system 300 receives supplemental data from other sources. In various implementations, the supplemental data includes interaction data associated with the event data. For example, the supplemental data may include a content interaction sharing an intermediary identifier with an event of the event data. As another example, the supplemental data may include a content item identifier that can be correlated to a transaction included in the event data. In some implementations, step 706 is optional. For example, in some implementations, first data processing system 200 does not transmit supplemental data to second data processing system 300.

At step 708, second data processing system 300 may correlate the event data to the supplemental data. For example, second data processing system 300 may match an identifier of a content item with an intermediary identifier of the event data to determine that the user has interacted with the content item. As an additional example, second data processing system 300 may determine a URL of a content item matches a website URL included in the event data. In some implementations, step 708 is optional. For example, second data processing system 300 may not receive supplemental data corresponding to every event within the event data.

At step 710, second data processing system 300 may analyze data to generate results. In various implementations, second data processing system 300 analyzes event data. Additionally or alternatively, second data processing system 300 may analyze supplemental data. In various implementations, second data processing system 300 performs various analysis operations to produce the results. In various implementations, the results include a count of the number of interactions and/or event data sharing a first characteristic. Additionally or alternatively, the results may include a sum of interactions (e.g., transactions, clicks, phone calls, etc.), a sum of the value associated with each interaction (e.g., a dollar amount), and/or metadata. In various implementations, the results are aggregate information. For example, the results may include statistical information associated with event data from a number of events. In some implementations, the results are saved in database 310. In various implementations, the results include data describing usage of application 12 in real time. For example, the results may include a count of a number of users currently viewing a specific content item. Additionally or alternatively, second data processing system 300 may identify a previous interaction of the user that was not performed using application 12 (e.g., cross-platform attribution, etc.). For example, second data processing system 300 may correlate a content interaction included in supplemental data to event data to determine a user previously interacted with the content on a different device than client device 10.

At step 712, second data processing system 300 may securely transmit the results to first data processing system 200. Additionally or alternatively, second data processing system 300 may securely transmit the results to a different destination. In some implementations, step 712 is optional.

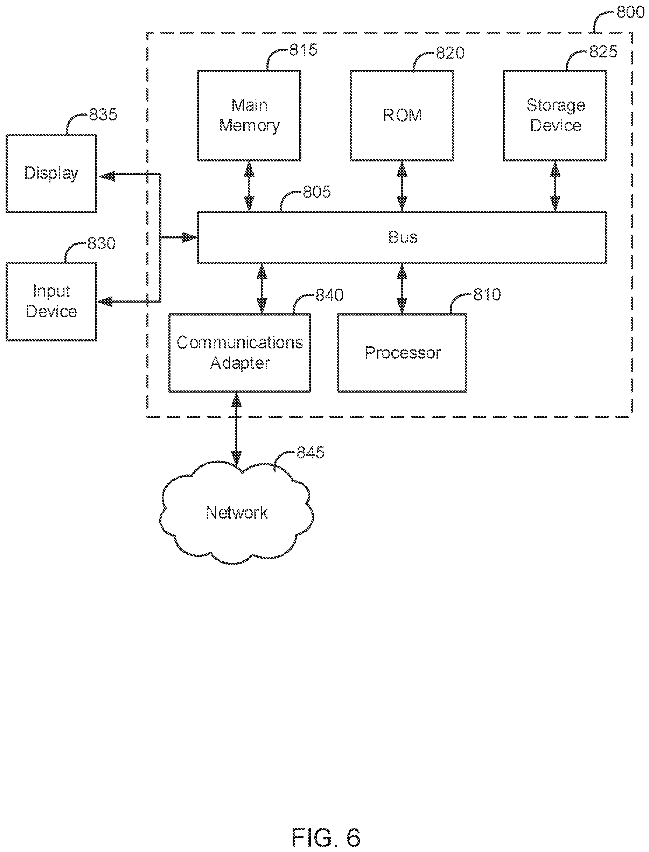

FIG. 6 illustrates a depiction of a computing system 800 that can be used, for example, to implement any of the illustrative systems (e.g., system 110, etc.) described in the present disclosure. The computing system 800 includes a bus 805 or other communication component for communicating information and a processor 810 coupled to the bus 805 for processing information. The computing system 800 also includes main memory 815, such as a random access memory ("RAM") or other dynamic storage device, coupled to the bus 805 for storing information, and instructions to be executed by the processor 810. Main memory 815 can also be used for storing position information, temporary variables, or other intermediate information during execution of instructions by the processor 810. The computing system 800 may further include a read only memory ("ROM") 820 or other static storage device coupled to the bus 805 for storing static information and instructions for the processor 810. A storage device 825, such as a solid state device, magnetic disk or optical disk, is coupled to the bus 805 for persistently storing information and instructions.

The computing system 800 may be coupled via the bus 805 to a display 835, such as a liquid crystal display, or active matrix display, for displaying information to a user. An input device 830, such as a keyboard including alphanumeric and other keys, may be coupled to the bus 805 for communicating information, and command selections to the processor 810. In another implementation, the input device 830 has a touch screen display 835. The input device 830 can include a cursor control, such as a mouse, a trackball, or cursor direction keys, for communicating direction information and command selections to the processor 810 and for controlling cursor movement on the display 835.

In some implementations, the computing system 800 may include a communications adapter 840, such as a networking adapter. Communications adapter 840 may be coupled to bus 805 and may be configured to enable communications with a computing or communications network 845 and/or other computing systems. In various illustrative implementations, any type of networking configuration may be achieved using communications adapter 840, such as wired (e.g., via Ethernet), wireless (e.g., via WiFi, Bluetooth, etc.), pre-configured, ad-hoc, LAN, WAN, etc.

According to various implementations, the processes that effectuate illustrative implementations that are described herein can be achieved by the computing system 800 in response to the processor 810 executing an arrangement of instructions contained in main memory 815. Such instructions can be read into main memory 815 from another computer-readable medium, such as the storage device 825. Execution of the arrangement of instructions contained in main memory 815 causes the computing system 800 to perform the illustrative processes described herein. One or more processors in a multi-processing arrangement may also be employed to execute the instructions contained in main memory 815. In alternative implementations, hard-wired circuitry may be used in place of or in combination with software instructions to implement illustrative implementations. Thus, implementations are not limited to any specific combination of hardware circuitry and software.

Although an example processing system has been described in FIG. 6, implementations of the subject matter and the functional operations described in this specification can be carried out using other types of digital electronic circuitry, or in computer software, firmware, or hardware, including the structures disclosed in this specification and their structural equivalents, or in combinations of one or more of them.

Further to the descriptions above, a user may be provided with controls allowing the user to make an election as to both if and when systems, programs, or features described herein may enable collection of user information (e.g., information about a user's social network, social actions, or activities, profession, a user's preferences, or a user's current location), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user. In situations in which the systems described herein collect personal information about users or applications installed on a user device, or make use of personal information, the users are provided with an opportunity to control whether programs or features collect user information (e.g., information about a user's social network, social actions, or activities, profession, a user's preferences, or a user's current location). In addition or in the alternative, certain data may be treated in one or more ways before it is stored or used, so that personal information is removed.

System and methods of the present disclosure offer many benefits over existing systems. Typically, data from client device applications is collected by an aggregator such as a server associated with the operation of the application before being forwarded to an analysis system for analysis. However, the connection between the client device and the aggregator is not always reliable. For example, the client device may be unable to transmit data to the aggregator and/or the aggregator may become unavailable (e.g., go offline for maintenance, etc.). The novel SDK and computer architectures described herein facilitate a redundant path for reporting event data. Specifically, the SDK of the present disclosure facilitates transmitting event data to a separate endpoint in response to a failure in transmitting data to the aggregator. Therefore, the SDK of the present disclosure improves existing systems by facilitating redundant reporting of event data and thereby reducing lost data.

Furthermore, conventional systems introduce a time delay between when client devices generate event data and when the analysis system receives the event data. As discussed earlier, typically client devices transmit event data to an aggregator that forwards the data to the analysis system. However, there may be a time delay between when the aggregator receives the data and when the analysis system receives the data. This time delay may reduce the responsiveness of an application to changes. For example, if an application has a software bug that is causing transactions to prematurely fail, a conventional system may take some time to detect the software bug. However, the novel SDK and computer architectures described herein facilitate direct transmission of event data to the analysis system. Specifically, the SDK of the present disclosure facilitates increased responsiveness of application events (e.g., crashes, bugs, etc.) by reducing the time delay between when data is generated by client devices and when an analysis system receives the data.

Moreover, generally systems that correlate data from different entities match the data using identifiers. For example, a system may match a user interaction with a user transaction using a user identifier. The novel SDK and computer architectures described herein facilitate correlation of data from different entities without revealing PII. Specifically, the SDK and computer architectures of the present disclosure facilitate correlating data from different entities using an intermediate identifier that does not reveal PII. Furthermore, content providers (e.g., application developers, etc.) may improve analytics results without having to transmit sensitive data to the analysis system. For example, the content provider may identify supplemental data from their own databases and remove sensitive identifiers (e.g., personal identifiers, etc.) before transmitting the data to the analysis system.

Implementations of the subject matter and the operations described in this specification can be carried out using digital electronic circuitry, or in computer software embodied on a tangible medium, firmware, or hardware, including the structures disclosed in this specification and their structural equivalents, or in combinations of one or more of them. Implementations of the subject matter described in this specification can be implemented as one or more computer programs, i.e., one or more modules of computer program instructions, encoded on one or more computer storage medium for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer-readable storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate components or media (e.g., multiple CDs, disks, or other storage devices). The computer storage medium may be tangible and/or may be non-transitory.

The operations described in this specification can be implemented as operations performed by a data processing apparatus on data stored on one or more computer-readable storage devices or received from other sources.

The term "data processing apparatus" or "computing device" encompasses all kinds of apparatus, devices, and machines for processing data, including by way of example, a programmable processor, a computer, a system on a chip, or multiple ones, or combinations of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit). Circuit as utilized herein, may be implemented using hardware circuitry (e.g., FPGAs, ASICs, etc.), software (instructions stored on one or more computer readable storage media and executable by one or more processors), or any combination thereof.

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant ("PDA"), a mobile audio or video player, a game console, a Global Positioning System ("GPS") receiver, or a portable storage device (e.g., a universal serial bus ("USB") flash drive), to name just a few. Devices suitable for storing computer program instructions and data include all forms of non-volatile memory, media and memory devices, including by way of example, semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be carried out using a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Implementations of the subject matter described in this specification can be carried out using a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such backend, middleware, or frontend components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some implementations, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular implementations of particular inventions. Certain features that are described in this specification in the context of separate implementations can also be carried out in combination or in a single implementation. Conversely, various features that are described in the context of a single implementation can also be carried out in multiple implementations, separately, or in any suitable subcombination. Moreover, although features may be described above as acting in certain combinations and even initially claimed as such, one or more features from a claimed combination can, in some cases, be excised from the combination, and the claimed combination may be directed to a subcombination or variation of a subcombination. Additionally, features described with respect to particular headings may be utilized with respect to and/or in combination with illustrative implementations described under other headings; headings, where provided, are included solely for the purpose of readability and should not be construed as limiting any features provided with respect to such headings.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products embodied on tangible media.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method (500) comprising:
detecting (504), by a software development kit, SDK, (20), an event and generating, by the SDK, event data in response to user interactions with a mobile application (12) on a mobile device (10), wherein the event data includes an event type;
collecting (506), by the SDK, event data for each detected event;
bundling (508), by the SDK, the event data, the method being **characterized in that** it further comprises :
determining (502), by the SDK, that a connection to a first data processing system (200) is unavailable;
preparing (510), by the SDK, the bundled event data for transmission to a second data processing system (300) by removing identifiers from the bundled event data; and
securely transmitting (512), by the SDK, the thus prepared bundled event data to the second data processing system (300).

2. The method of Claim 1, further comprising:
tagging a feature of the mobile application as an event generator;
requesting, by the SDK from the mobile application, interaction data associated with the user interaction with the mobile application based on the event type
securely transmitting, by the SDK, the interaction data to the first data processing system.

3. The method of Claim 2, wherein the SDK bundles interaction data from a number of events and transmits the bundled interaction data in response to a threshold; and
optionally:
wherein the threshold is a threshold period of time or a threshold number of events.

4. The method of Claims 2 or 3, wherein the SDK generates a signature of the interaction data using a hashing algorithm, and wherein the first data processing system validates an authenticity of the interaction data using the signature.

5. The method of any of Claims 2 to 4, further comprising securely transmitting the interaction data to the second data processing system associated with the mobile application, and wherein the SDK removes personal identifiers from the interaction data prior to securely transmitting the interaction data to the first data processing system.

6. The method of Claim 5, wherein the interaction data includes an intermediary identifier, and wherein method further comprises:
identifying, by the second data processing system, supplemental data using the intermediary identifier;
transmitting, by the second data processing system to the first data processing system, the supplemental data; and
correlating, by the first data processing system, the interaction data with the supplemental data; and
optionally:
wherein the first data processing system does not have access to personally identifying information.

7. A system (100) for correlating data from different entities, comprising:
a client device (10) including a processing circuit having one or more processors and memory, the memory having instructions stored thereon that, when executed by the one or more processors, cause the processing circuit to:
detect (504) an event and generate event data in response to user interactions with a mobile application (12), wherein the event data includes an event type;
collect (506) event data for each detected event;
bundle (508) the event data, the system being **characterized in that** said instructions further cause the processing circuit to:
determine (502) that a connection to a first data processing system (200) is unavailable;
prepare (510) the bundled event data for transmission to a second data processing system (300) by removing identifiers from the bundled event data;
securely transmit (512) the thus prepared bundled event data to the second data processing system (300),
wherein the instructions constitute a software development kit, SDK, (20).

8. The system of Claim 7, wherein the instructions cause the one or more processors to:
tag a feature in the mobile application as an event generator;
request interaction data associated with the user interaction with the mobile application based on the event type; and
securely transmit the interaction data to the first data processing system.

9. The system of Claim 8, wherein the instructions cause the one or more processors to bundle interaction data from a number of events and transmit the bundled interaction data in response to a threshold;
optionally:
wherein the threshold is a threshold period of time or a threshold number of events.

10. The system of Claim 8 or 9, further comprising the first data processing system, wherein the instructions cause the one or more processors to generate a signature of the interaction data using a hashing algorithm, and wherein the first data processing system validates an authenticity of the interaction data using the signature.

11. The system of any of Claims 8 to 10, wherein the instructions further cause the one or more processors to securely transmit the interaction data to the second data processing system and remove personal identifiers from the interaction data prior to securely transmitting the interaction data to the first data processing system.

12. The system of Claim 11, further comprising the first data processing system and the second data processing system, wherein the interaction data includes an intermediary identifier, wherein the second data processing system identifies supplemental data using the intermediary identifier;
wherein the second data processing system transmits the supplemental data to the first data processing system; and
wherein the first data processing system correlates the interaction data with the supplemental data; and
optionally:
wherein the first data processing system does not have access to personally identifying information.

13. A computer-readable medium having instructions constituting a software development kit, SDK, (20) for a mobile device (10) stored thereon that, when executed by one or more processors, cause the one or more processors to:
detect (504) an event and generate event data in response to user interactions with a mobile application (12) on the mobile device, wherein the event data includes an event type;
collect (506) event data for each detected event;
bundle (508) the event data, the medium being **characterized in that** said instructions further cause the one or more processors to:
determine (502) that a connection to a first data processing system (200) is unavailable;
prepare (510) the bundled event data for transmission to a second processing system (300) by removing identifiers from the bundled event data; and
securely transmit (512) the thus prepared bundled event data to the second data processing system.

14. The computer-readable medium of Claim 13, wherein the instructions cause the one or more processors to:
tag a feature of a mobile application as an event generator;
request interaction data from the mobile device associated with the user interaction with the mobile application based on the event type;
securely transmit the interaction data to the first data processing system.

15. The computer-readable medium of Claim 14, wherein the SDK bundles interaction data from a number of events and transmits the bundled interaction data in response to a threshold, wherein the threshold is a threshold period of time or a threshold number of events, wherein the interaction SDK generates a signature of the interaction data using a hashing algorithm; or
wherein the instructions further cause the one or more processors to securely transmit the interaction data to the second data processing system and remove personal identifiers from the interaction data prior to securely transmitting the interaction data to the first data processing system.

## Patentansprüche

1. Verfahren (500) umfassend:
Detektieren (504) eines Ereignisses durch ein Softwarentwicklungskit (software development kit, SDK) (20) und Erzeugen von Ereignisdaten durch das SDK als Reaktion auf Benutzerinteraktionen mit einer mobilen Anwendung (12) auf einer mobilen Vorrichtung (10), wobei die Ereignisdaten einen Ereignistyp beinhalten;
Sammeln (506) von Ereignisdaten für jedes detektierte Ereignis durch das SDK;
Bündeln (508) der Ereignisdaten durch das SDK, wobei das Verfahren **dadurch gekennzeichnet ist, dass** es ferner Folgendes umfasst:
Bestimmen (502), dass eine Verbindung zu einem ersten Datenverarbeitungssystem (200) nicht verfügbar ist, durch das SDK;
Vorbereiten (510) der gebündelten Ereignisdaten durch das SDK zur Übertragung an ein zweites Datenverarbeitungssystem (300) durch Entfernen von Bezeichnern aus den gebündelten Ereignisdaten; und
sicheres Übertragen (512) der somit vorbereiteten gebündelten Ereignisdaten durch das SDK an das zweite Datenverarbeitungssystem (300).

2. Verfahren nach Anspruch 1, ferner umfassend:
Kennzeichnen eines Merkmals der mobilen Anwendung als Ereignisgenerator;
Anfordern von Interaktionsdaten, die der Benutzerinteraktion mit der mobilen Anwendung zugeordnet sind, durch das SDK von der mobilen Anwendung basierend auf dem Ereignistyp
sicheres Übertragen der Interaktionsdaten an das erste Datenverarbeitungssystem durch das SDK.

3. Verfahren nach Anspruch 2, wobei das SDK Interaktionsdaten aus einer Anzahl von Ereignissen bündelt und die gebündelten Interaktionsdaten als Reaktion auf einen Schwellenwert überträgt; und
optional:
wobei der Schwellwert eine Schwellwertzeitdauer oder eine Schwellwertzahl von Ereignissen ist.

4. Verfahren gemäß Anspruch 2 oder 3, wobei das SDK eine Signatur der Interaktionsdaten unter Verwendung eines Hash-Algorithmus erzeugt und wobei das erste Datenverarbeitungssystem eine Authentizität der Interaktionsdaten unter Verwendung der Signatur validiert.

5. Verfahren nach einem der Ansprüche 2 bis 4, ferner umfassend das sichere Übertragen der Interaktionsdaten an das zweite Datenverarbeitungssystem, das der mobilen Anwendung zugeordnet ist, und wobei das SDK persönliche Bezeichner aus den Interaktionsdaten entfernt, bevor die Interaktionsdaten sicher an das erste Datenverarbeitungssystem übertragen werden.

6. Verfahren nach Anspruch 5, wobei die Interaktionsdaten einen Zwischenbezeichner beinhalten und wobei das Verfahren ferner Folgendes umfasst:
Identifizieren von zusätzlichen Daten durch das zweite Datenverarbeitungssystem unter Verwendung des Zwischenbezeichners;
Übertragen der zusätzlichen Daten von dem zweiten Datenverarbeitungssystem zu dem ersten Datenverarbeitungssystem; und
Korrelieren der Interaktionsdaten mit den zusätzlichen Daten durch das erste Datenverarbeitungssystem; und
optional:
wobei das erste Datenverarbeitungssystem keinen Zugriff auf persönlich identifizierende Informationen aufweist.

7. System (100) zum Korrelieren von Daten von unterschiedlichen Entitäten, umfassend:
eine Client-Vorrichtung (10), die eine Verarbeitungsschaltung mit einem oder mehreren Prozessoren und einem Speicher aufweist, wobei der Speicher darauf gespeicherte Anweisungen aufweist, die, wenn sie durch den einen oder die mehreren Prozessoren ausgeführt werden, die Verarbeitungsschaltung zu Folgendem veranlassen:
Detektieren (504) eines Ereignisses und Erzeugen von Ereignisdaten als Reaktion auf Benutzerinteraktionen mit einer mobilen Anwendung (12), wobei die Ereignisdaten einen Ereignistyp beinhalten;
Sammeln (506) von Ereignisdaten für jedes detektierte Ereignis;
Bündeln (508) der Ereignisdaten, wobei das System **dadurch gekennzeichnet ist, dass** die Anweisungen ferner die Verarbeitungsschaltung zu Folgendem veranlassen:
Bestimmen (502), dass eine Verbindung zu einem ersten Datenverarbeitungssystem (200) nicht verfügbar ist;
Vorbereiten (510) der gebündelten Ereignisdaten zur Übertragung an ein zweites Datenverarbeitungssystem (300) durch Entfernen von Bezeichnern aus den gebündelten Ereignisdaten;
sicheres Übertragen (512) der somit vorbereiteten gebündelten Ereignisdaten an das zweite Datenverarbeitungssystem (300),
wobei die Anweisungen ein Softwarentwicklungskit, SDK, (20) darstellen.

8. System nach Anspruch 7, wobei die Anweisungen den einen oder die mehreren Prozessoren zu Folgendem veranlassen:
Kennzeichnen eines Merkmals in der mobilen Anwendung als Ereignisgenerator;
Anfordern von Interaktionsdaten, die der Benutzerinteraktion mit der mobilen Anwendung zugeordnet sind, basierend auf dem Ereignistyp; und
sicheres Übertragen der Interaktionsdaten an das erste Datenverarbeitungssystem.

9. System nach Anspruch 8, wobei die Anweisungen veranlassen, dass ein oder mehrere Prozessoren Interaktionsdaten aus einer Anzahl von Ereignissen bündeln und die gebündelten Interaktionsdaten als Reaktion auf einen Schwellenwert übertragen;
optional:
wobei der Schwellwert eine Schwellwertzeitdauer oder eine Schwellwertzahl von Ereignissen ist.

10. System nach Anspruch 8 oder 9, ferner umfassend das erste Datenverarbeitungssystem, wobei die Anweisungen den einen oder die mehreren Prozessoren veranlassen, eine Signatur der Interaktionsdaten unter Verwendung eines Hash-Algorithmus zu erzeugen, und wobei das erste Datenverarbeitungssystem die Authentizität der Interaktionsdaten unter Verwendung der Signatur validiert.

11. System nach einem der Ansprüche 8 bis 10, wobei die Anweisungen ferner veranlassen, dass der eine oder die mehreren Prozessoren die Interaktionsdaten sicher an das zweite Datenverarbeitungssystem übertragen und persönliche Bezeichner aus den Interaktionsdaten entfernen, bevor die Interaktionsdaten sicher an das erste Datenverarbeitungssystem übertragen werden.

12. System nach Anspruch 11, ferner umfassend das erste Datenverarbeitungssystem und das zweite Datenverarbeitungssystem, wobei die Interaktionsdaten einen Zwischenbezeichner enthalten, wobei das zweite Datenverarbeitungssystem zusätzliche Daten unter Verwendung des Zwischenbezeichners identifiziert;
wobei das zweite Datenverarbeitungssystem die zusätzlichen Daten an das erste Datenverarbeitungssystem überträgt; und
wobei das erste Datenverarbeitungssystem die Interaktionsdaten mit den zusätzlichen Daten korreliert; und
optional:
wobei das erste Datenverarbeitungssystem keinen Zugriff auf persönlich identifizierende Informationen aufweist.

13. Computerlesbares Medium, das Anweisungen aufweist, die ein Softwarentwicklungskit, SDK, (20) für eine mobile Vorrichtung (10) darstellen, das darauf gespeichert ist und das, wenn es durch einen oder mehrere Prozessoren ausgeführt wird, den einen oder die mehreren Prozessoren zu Folgendem veranlasst:
Detektieren (504) eines Ereignisses und Erzeugen von Ereignisdaten als Reaktion auf Benutzerinteraktionen mit einer mobilen Anwendung (12) auf der mobilen Vorrichtung, wobei die Ereignisdaten einen Ereignistyp beinhalten;
Sammeln (506) von Ereignisdaten für jedes detektierte Ereignis;
Bündeln (508) der Ereignisdaten, wobei das Medium **dadurch gekennzeichnet ist, dass** die Anweisungen ferner den einen oder die mehreren Prozessoren zu Folgendem veranlassen:
Bestimmen (502), dass eine Verbindung zu einem ersten Datenverarbeitungssystem (200) nicht verfügbar ist;
Vorbereiten (510) der gebündelten Ereignisdaten zur Übertragung an ein zweites Verarbeitungssystem (300) durch Entfernen von Bezeichnern aus den gebündelten Ereignisdaten; und
sicheres Übertragen (512) der somit vorbereiteten gebündelten Ereignisdaten an das zweite Datenverarbeitungssystem.

14. Computerlesbares Medium nach Anspruch 13, wobei die Anweisungen den einen oder die mehreren Prozessoren zu Folgendem veranlassen:
Kennzeichnen eines Merkmals einer mobilen Anwendung als Ereignisgenerator;
Anfordern von Interaktionsdaten, die der Benutzerinteraktion mit der mobilen Anwendung zugeordnet sind, von der mobilen Vorrichtung basierend auf dem Ereignistyp;
sicheres Übertragen der Interaktionsdaten an das erste Datenverarbeitungssystem.

15. Computerlesbares Medium nach Anspruch 14, wobei das SDK Interaktionsdaten aus einer Anzahl von Ereignissen bündelt und die gebündelten Interaktionsdaten als Reaktion auf einen Schwellenwert überträgt, wobei der Schwellenwert eine Schwellenzeitdauer oder eine Schwellenanzahl von Ereignissen ist, wobei das Interaktions-SDK eine Signatur der Interaktionsdaten unter Verwendung eines Hash-Algorithmus erzeugt; oder
wobei die Anweisungen ferner veranlassen, dass der eine oder die mehreren Prozessoren die Interaktionsdaten sicher an das zweite Datenverarbeitungssystem übertragen und persönliche Bezeichner aus den Interaktionsdaten entfernen, bevor die Interaktionsdaten sicher an das erste Datenverarbeitungssystem übertragen werden.

## Revendications

1. Procédé (500) comprenant :
la détection (504), par un kit de développement logiciel, SDK, (20), d'un événement et la génération, par le SDK, de données d'événement en réponse à des interactions de l'utilisateur avec une application mobile (12) sur un dispositif mobile (10), dans lequel les données d'événement comportent un type d'événement ;
la collecte (506), par le SDK, de données d'événement pour chaque événement détecté ;
le regroupement (508), par le SDK, des données d'événement, le procédé étant **caractérisé en ce qu'**il comprend également :
la détermination (502), par le SDK, qu'une connexion à un premier système de traitement de données (200) n'est pas disponible ;
la préparation (510), par le SDK, des données d'événement regroupées pour une transmission à un second système de traitement de données (300) en supprimant des identifiants des données d'événement regroupées ; et
la transmission sécurisée (512), par le SDK, des données d'événement regroupées ainsi préparées au second système de traitement de données (300).

2. Procédé selon la revendication 1, comprenant également :
l'étiquetage d'une fonctionnalité de l'application mobile comme générateur d'événements ;
la demande, par le SDK de l'application mobile, de données d'interaction associées à l'interaction de l'utilisateur avec l'application mobile sur la base du type d'événement
la transmission sécurisée, par le SDK, des données d'interaction au premier système de traitement de données.

3. Procédé selon la revendication 2, dans lequel le SDK regroupe des données d'interaction d'un certain nombre d'événements et transmet les données d'interaction regroupées en réponse à un seuil ; et
éventuellement :
dans lequel le seuil est une période de temps seuil ou un nombre d'événements seuil.

4. Procédé selon les revendications 2 ou 3, dans lequel le SDK génère une signature des données d'interaction à l'aide d'un algorithme de hachage, et dans lequel le premier système de traitement de données valide une authenticité des données d'interaction à l'aide de la signature.

5. Procédé selon l'une quelconque des revendications 2 à 4, comprenant également la transmission sécurisée des données d'interaction au second système de traitement de données associé à l'application mobile, et dans lequel le SDK supprime des identifiants personnels des données d'interaction avant de transmettre de manière sécurisée les données d'interaction au premier système de traitement de données.

6. Procédé selon la revendication 5, dans lequel les données d'interaction comportent un identifiant intermédiaire, et dans lequel le procédé comprend également :
l'identification, par le second système de traitement de données, de données supplémentaires à l'aide de l'identifiant intermédiaire ;
la transmission, par le second système de traitement de données au premier système de traitement de données, des données supplémentaires ; et
la corrélation, par le premier système de traitement de données, des données d'interaction avec les données supplémentaires ; et éventuellement :
dans lequel le premier système de traitement de données n'a pas accès aux informations d'identification personnelle.

7. Système (100) de corrélation de données provenant de différentes entités, comprenant :
un dispositif client (10) comportant un circuit de traitement doté d'un ou plusieurs processeurs et d'une mémoire, la mémoire contenant des instructions qui, lorsqu'elles sont exécutées par les un ou plusieurs processeurs, amènent le circuit de traitement à :
détecter (504) un événement et générer des données d'événement en réponse aux interactions de l'utilisateur avec une application mobile (12), dans lequel les données d'événement comportent un type d'événement ;
collecter (506) des données d'événement pour chaque événement détecté ;
regrouper (508) les données d'événement, le système étant **caractérisé en ce que** lesdites instructions amènent également le circuit de traitement à :
déterminer (502) qu'une connexion à un premier système de traitement de données (200) n'est pas disponible ;
préparer (510) les données d'événement regroupées pour une transmission à un second système de traitement de données (300) en supprimant des identifiants des données d'événement regroupées ;
transmettre de manière sécurisée (512) les données d'événement regroupées ainsi préparées au second système de traitement de données (300),
dans lequel les instructions constituent un kit de développement logiciel, SDK, (20).

8. Système selon la revendication 7, dans lequel les instructions amènent les un ou plusieurs processeurs à :
étiqueter une fonctionnalité de l'application mobile comme générateur d'événements ;
demander des données d'interaction associées à l'interaction de l'utilisateur avec l'application mobile sur la base du type d'événement ; et
transmettre de manière sécurisée les données d'interaction au premier système de traitement de données.

9. Système selon la revendication 8, dans lequel les instructions amènent les un ou plusieurs processeurs à regrouper des données d'interaction à partir d'un certain nombre d'événements et à transmettre les données d'interaction regroupées en réponse à un seuil ;
éventuellement :
dans lequel le seuil est une période de temps seuil ou un nombre d'événements seuil.

10. Système selon la revendication 8 ou 9, comprenant également le premier système de traitement de données, dans lequel les instructions amènent les un ou plusieurs processeurs à générer une signature des données d'interaction à l'aide d'un algorithme de hachage, et dans lequel le premier système de traitement de données valide une authenticité des données d'interaction à l'aide de la signature.

11. Système selon l'une quelconque des revendications 8 à 10, dans lequel les instructions amènent également les un ou plusieurs processeurs à transmettre de manière sécurisée les données d'interaction au second système de traitement de données et à supprimer des identifiants personnels des données d'interaction avant de transmettre de manière sécurisée les données d'interaction au premier système de traitement de données.

12. Système selon la revendication 11, comprenant également le premier système de traitement de données et le second système de traitement de données, dans lequel les données d'interaction comportent un identifiant intermédiaire, dans lequel le second système de traitement de données identifie des données supplémentaires à l'aide de l'identifiant intermédiaire ;
dans lequel le second système de traitement de données transmet les données supplémentaires au premier système de traitement de données ; et
dans lequel le premier système de traitement de données corrèle les données d'interaction avec les données supplémentaires ; et éventuellement :
dans lequel le premier système de traitement de données n'a pas accès aux informations d'identification personnelle.

13. Support lisible par ordinateur contenant des instructions constituant un kit de développement logiciel, SDK, (20), pour un dispositif mobile (10) qui, lorsqu'elles sont exécutées par un ou plusieurs processeurs, amènent les un ou plusieurs processeurs à :
détecter (504) un événement et générer des données d'événement en réponse à des interactions de l'utilisateur avec une application mobile (12) sur le dispositif mobile, dans lequel les données d'événement comportent un type d'événement ;
collecter (506) des données d'événement pour chaque événement détecté ;
regrouper (508) les données d'événement, le support étant **caractérisé en ce que** lesdites instructions amènent également les un ou plusieurs processeurs à :
déterminer (502) qu'une connexion à un premier système de traitement de données (200) n'est pas disponible ;
préparer (510) les données d'événement regroupées pour une transmission à un second système de traitement (300) en supprimant des identifiants des données d'événement regroupées ; et
transmettre de manière sécurisée (512) les données d'événement regroupées ainsi préparées au second système de traitement de données.

14. Support lisible par ordinateur selon la revendication 13, dans lequel les instructions amènent les un ou plusieurs processeurs à :
étiqueter une fonctionnalité d'une application mobile comme générateur d'événements ;
demander des données d'interaction provenant du dispositif mobile associées à l'interaction de l'utilisateur avec l'application mobile sur la base du type d'événement ;
transmettre de manière sécurisée les données d'interaction au premier système de traitement de données.

15. Support lisible par ordinateur selon la revendication 14, dans lequel le SDK regroupe des données d'interaction d'un certain nombre d'événements et transmet les données d'interaction regroupées en réponse à un seuil, dans lequel le seuil est une période de temps seuil ou un nombre d'événements seuil, dans lequel le SDK d'interaction génère une signature des données d'interaction à l'aide d'un algorithme de hachage ; ou dans lequel les instructions amènent également les un ou plusieurs processeurs à transmettre de manière sécurisée les données d'interaction au second système de traitement de données et à supprimer des identifiants personnels des données d'interaction avant de transmettre de manière sécurisée les données d'interaction au premier système de traitement de données.
